# EUROPEAN PATENT SPECIFICATION

(11) **EP 3 023 568 B1**
(45) Date of publication and mention of the grant of the patent: **01.03.2017**
(21) Application number: 15446504.1
(22) Date of filing: 16.11.2015
(51) Int. Cl.: E06B 1/60, F16B 5/02, F16B 37/12

(54) **FRAME SCREW**
RAHMENSCHRAUBE
VIS DE CADRE

(30) Priority: 20.11.2014 SE 1451398
(43) Date of publication of application: 25.05.2016
(73) Proprietor: ESSVE Produkter AB, 164 07 Kista (SE)
(72) Inventor: LINDBERG, Christofer, 187 52 Täby (SE); SVENSSON, Jonas, 186 39 Vallentuna (SE)
(74) Representative: Zacco Sweden AB

(56) References cited:
- EP-A1- 1 184 577
- EP-A1- 2 331 830
- BE-A1- 874 926
- US-A- 4 673 323

## Description

### TECHNICAL FIELD

The present invention relates to a frame screw for mounting a frame to a transom with a gap there between.

### TECHNICAL BACKGROUND

When installing frames in buildings, such as doorframes and window frames special mounting methods and fastening elements needs to be used to ensure that the doors and windows can be manoeuvred as intended after the mounting of said building elements. The frame must be mounted in such a way that it is fixated in relation to the corresponding door or window with a large enough gap for said door or window to be opened and closed smoothly but be adjustable in regards to the adjacent transoms to achieve this effect.

Depending on the situation and the materials used there are a plurality of mounting techniques and fasting elements to use. Two of the most common ones are frame screws and frame sleeves which can be mounted in the frame in such a way that they are adjustable in regards to the adjacent transom but leave a gap there between. This gap ensures that there is room for adjustments to the frame so the window or door within the frame can move freely when being opened or closed. Frames are usually pre-drilled where the frame screws or frame sleeves will be mounted when installing the frame with said frame fastening elements.

SE468400 shows a basic frame screw used for mounting a frame to a transom leaving a gap. The frame screw comprises a screw member and a sleeve member attached to each other in such a way that they can freely rotate about a longitudinal axis. The frame screw is fixated rotationally by using a special tool that attaches to both the screw member and the sleeve member when inserted into the frame and transom. Another tool is then used to rotate the sleeve member about the axis of the screw member to displace the frame in relation to the transom and thus adjusting the gap there between to a suitable width. A problem with this type of fastening element is that there is a risk of damaging the frame, especially on the inside where it is inserted, which is the side that will be visible in the completed building. The risk of damaging the frame material is due to the threads of the screw being pushed into the frame. The resulting thread path in the frame is therefore crushed and will risk splitting the material on adjacent sides of a thread. This will result in a deformed structure in the material of the frame.

Another fastening element commonly used is a frame sleeve, shown in SE524383. A frame sleeve is, as opposed to a frame screw inserted in the frame from its outside before the frame is mounted into the surrounding transoms. The frame is then adjusted accordingly by rotation of the sleeve member, before secured in the transom with separate screws from the inside of the frame. This eliminates the risk of damaging the visible inside of the frame. This particular frame sleeve is provided with cuts on its front portion adapted to drill into the frame if the pre-drilled hole in the frame is of a lesser diameter than the frame sleeve. However, this solution is reliant on additional elements apart from the sleeve itself in the form of external screws. Furthermore, if one or several frame sleeves needs to be replaced or moved, the entire frame needs to be dismounted before the sleeve or sleeves can be removed from the frame as it is inserted from the outside of the frame.

Improvements have been made to frame screws in some regards. According to one technical solution, the sleeve member of the frame screw is formed with two flat surfaces on opposite sides. These flat surfaces creates two respective cavities between the sleeve member and the surrounding frame to ease the removal of material in the form of chip and shiver being produced when the sleeve member is inserted in the frame. This is beneficial as it lessens the risk of damaging the frame as damage more easily occurs when build-up of this excess material is clogged up between the sleeve member and the frame. However, there is a disadvantage with such a solution as the sleeve member is mechanically weakened due to the lowered thickness of the sleeve wall. Hence, the sleeve members of these frame screws have a tendency to crack, especially if overloaded and if the adjustment tool is not inserted in the correct way. There is also a drawback with this type of frame screw as it tends to split the frame due to the threads of the sleeve member being pushed into the frame material and crushing a thread path in the frame when the frame screw is being inserted into the pre-drilled frame.

Document EP 2 331 830 A1 is considered the closest prior art and discloses the features of the preamble of claim 1.

Therefore there is a need to come up with an improved fastening element for frames in building which eliminates drawbacks with prior art. Further, there is a need for a device which can be applied on the easily accessible inside of the frame without risking damaging the frame material. There is also a need for a mechanically strong fastening element which will not risk cracking or easily being fatigued when mounted.

### SUMMARY OF THE INVENTION

A frame screw is intended for fastening a frame, e.g. a door frame or a window frame, to a transom in a secure and efficient manner, whilst enabling readjustment of the gap between the door frame and the transom in order to provide for a correct installation of the door (or window). A frame screw is intended for pre-drilled bores rather than being screwed directly into concrete, brick or the like.

The object of the present invention relates to a frame screw as defined in the preamble of claim 1, and further defined by the features of the characterizing part of claim 1.

The purpose of the present invention relates to a frame screw adapted to lessen the risk of damaging a surrounding frame when the frame screw is being mounted into said frame. The frame screw comprises; a screw member, and a sleeve member. The screw member further comprises a tip portion, a shaft comprising threads, and a head portion adapted to fit to a first tool. The sleeve member further comprises an inner surface adapted to fit to the first tool and a second tool, an outer surface comprising threads, a front portion, a front side, and a rear portion. The screw member is rotatable connected to the front portion of the sleeve member and the head portion of the screw member is reachable by the first tool from inside of the sleeve member. The screw member and the sleeve member are adapted to be rotationally fixated when using the first tool and rotationally free-moving when using the second tool, the rotation when using the second tool being used to adjust the rotational displacement of the sleeve member in respect to the screw member. Moreover, the outer surface of the sleeve member comprises at least one recess adapted for cutting a thread path into a surrounding frame when being used.

This has the advantage that the frame will suffer less damage due to lesser deformation of the surrounding frame material. The lesser damage done on the frame is a result of the thread spiral being cut rather than crushed or split as in prior art solution. This leads to a more visually satisfying frame as the end result.

By the provision that the outer surface of the sleeve member comprises at least one recess adapted for cutting a thread path into a surrounding frame when being used, the configuration of the frame screw enables that when the frame screw is inserted into the frame, the recess will, upon engaging the material of the frame, cut the path for the threads of the sleeve member. The threads of the sleeve member will then run smoothly in the thread without splitting or crushing the material of the frame. Thus, a recess adapted for cutting a path for the threads reduces the risk of damaging the frame and its surface, which is particularly critical as the surface often has a lacquered finish.

Thus, the configuration of the frame screw is different from fasteners and screws provided with scrapers or pre-cutting edges for drilling their own bores, which are only configured for drilling a bore corresponding to a core diameter of the external thread.

As is mentioned above, the frame screw is configured to be readjusted after insertion of the frame screw into a wall segment. That is, the frame screw is configured to be readjusted upon a rotation of the sleeve member in an opposite direction to the insertion direction of a screw fastener. The frame screw is capable of being readjusted due to the rotatable configuration of the screw and the sleeve member.

Hence, it is to be noted that the frame screw is typically a readjustable frame screw. The readjustable configuration of the frame screw is provided by the provisions above, i.e. the screw member is rotatable connected to the front portion of the sleeve member and the head portion of the screw member is reachable by the first tool from inside of the sleeve member. The screw member and the sleeve member are adapted to be rotationally fixated when using the first tool and rotationally free-moving when using the second tool, the rotation when using the second tool being used to adjust the rotational displacement of the sleeve member in respect to the screw member.

In this manner, the frame screw is configured to permit at least a certain degree of adjustment of the connection in order to allow for a displacement of the frame relative to the transom. To this end, the frame is displaced relative to the transom because the frame is moving on threads of the sleeve member. Accordingly, a frame screw is different from a conventional fastening element, which is intended for attaining a permanent connection between e.g. two wall segments.

Typically, the recess is disposed on the outer surface comprising the threads. In other words, at least a part of the threads comprises at least a part of the recess.

According to one example embodiment, the at least one recess is arranged in a part of the outer surface comprising the threads. Typically, the recess extends across at least one thread as seen in the axial direction of the sleeve member. By way of an example, the recess extends from the front side towards the rear portion and across at least one thread, as seen in the axial direction.

Typically, the recess extends in a radial direction of the sleeve member. In other words, the recess extends in the radial direction from the outer surface of the external threads towards the radial centre of the sleeve member. By way of an example, the recess extends from the major diameter of the external threads to at least the minor diameter of the external threads, as seen in the radial direction; more preferably, the recess extends from the major diameter of the external threads and across the minor diameter of the external threads.

In addition, or alternatively, the depth of the recess, as seen in the radial direction, amounts at least to the height of the external threads, still preferably the depth of the recess, as seen in the radial direction, is larger than the height of the external threads.

According to one aspect of the invention, the front portion comprises an angled surface. The angled surface comprises a first edge and a second edge, wherein the first edge is the intersection of the front side and the angled surface, and the second edge is the intersection of the angled surface and the outer surface of the sleeve member.

This has the advantage that the frame screw is easy to insert into the frame wherein it is to be mounted with lesser risk of damaging the frame during the initial insertion.

According to another aspect of the invention the at least one recess originates from the first edge of the sleeve member and extends in a direction substantially towards the rear portion of the sleeve member.

This has the advantage that the cutting of the surrounding frame will be initialized right from the start of the mounting of the frame screw into the frame. This ensures a safe way of mounting the frame screw into the frame with a low risk of damaged material. The cutting will also be performed with a minimal initial contact surface due to the angled cutting edge, reducing the impact of the recess hitting the frame.

According to another aspect of the invention the at least one recess of the outer surface of the sleeve member comprises a first surface and a second surface separate from the outer surface of the sleeve member. The intersection of the first surface and the periphery of the outer surface create a first angle and the intersection of the second surface and the periphery of the outer surface creates a second angle. The first surface and the second surface intersect in between the outer surface and the inner surface.

This is advantageous as the mechanical properties of the recess can be modified with different values of the angles and directions of the surfaces. When manufacturing the frame screw variations in the shape of the recess can be altered to achieve a tailor made frame screw according to the situation.

The first angle of the recess as defined by the intersection of the first surface and the periphery of the outer surface may be formed in several different ways.

According to one example embodiment, the first angle of the recess defines a cutting edge intersection. A cutting edge intersection can either be formed by means of a right angle or an acute angle, as further described hereinafter. In this matter, the recess is configured to further improve the cutting of the thread path as mentioned above, whilst minimizing the risk of damaging the frame and its surface.

Thus according to yet another aspect of the invention, the at least one recess of the sleeve member comprises a first angle wherein the first angle is a right angle.

This has the advantage that the cutting effect of said first angle will produce a good cut into the frame. Another advantage of a right angle is that the manufacturing of the frame screw will be easy to perform which will keep the production costs low. A further advantage is that a right angle of the recces will create a large cavity for gathering shiver and debris produced by the cutting of the frame.

Further, according to yet another aspect of the invention, the at least one recess of the sleeve member comprises a first angle wherein the first angle is an acute angle.

This has the advantage that the cutting effect of said first angle will be very sharp and produce a really good cut into the frame. This will lessen the risk of damaged frame material due to the crushing motion of non-cutting threads even further.

According to yet a further aspect of the invention, the at least one recess of the sleeve member comprises a first angle wherein the first angle is an obtuse angle.

This has the advantage that an obtuse first angle will create a very large cavity for gathering shiver and debris produced by the cutting of the frame.

According to yet another aspect of the invention, the sleeve member of the frame screw comprises four recesses. Two of the recesses have sharp first angles, and two of the recesses having right first angles.

This has the advantage that the sleeve member will produce a very sharp cut into the frame with the recesses having sharp angles but also have large cavities in the recesses having right angles which will gather a large amount of shiver and debris produced by the cutting of the frame.

According to one aspect of the invention the length of the recess is in the range from about 25% up to about 50% of the length of the sleeve member.

According to a further aspect of the invention the length of the recess is in the range from about 30% up to about 40% of the length of the sleeve member.

This has the advantage that the cutting portion of the sleeve member is large enough to produce a smooth path for the threads of the sleeve member. Another advantage is that the rear portion of the sleeve member having no recess will be mechanically strong and durable. This is beneficial as this is the part of the sleeve which is being subjected to the highest amount of force when engaging the frame screw with the first or second tool.

### BRIEF DESCRIPTION OF FIGURES

Preferred embodiments of the invention will be further described with reference to the accompanying drawings.
Figure 1 shows a perspective view of a frame screw according to a first embodiment of the present invention.
Figure 2 shows a perspective view of a sleeve member of a frame screw according to an example embodiment of the present invention.
Figure 3 schematically shows a cross section view of a frame screw mounted into a frame and a transom according to an example embodiment of the present invention.
Figure 4a-c schematically shows a front view of a section of a sleeve member of a frame screw according to other example embodiments of the present invention.
Figure 5 shows a front view of a sleeve member of a frame screw according to an example of the present invention.

### DETAILED DESCRIPTION OF EXAMPLE EMBODIMENTS OF THE INVENTION

Herein embodiments of the invention will be described in detail with reference to the appended drawings. As will be perceived the invention can be modified in various ways without derailing from the scope of the claims. Thus the drawings should be viewed upon as illustrative in their nature and not restrictive. All drawings may not be made to scale.

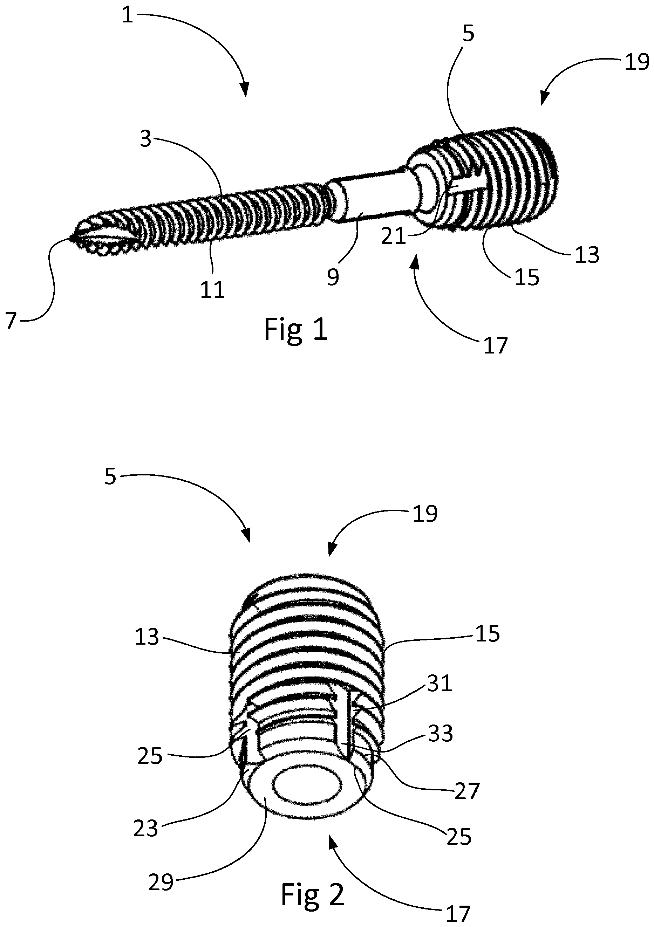

Figure 1 shows a perspective view of a frame screw 1 according to a first embodiment of the present invention. The frame screw 1 is adapted to be used as a mounting element between a frame and a transom adjacent to said frame. As such, the frame screw is intended for fastening a frame, e.g. a door frame or a window frame, to a transom. The frame screw 1 comprises a screw member 3 and a sleeve member 5. The screw member 3 comprises a tip portion 7, a shaft 9 comprising threads 11 and a head portion adapted to fit to a first tool. The sleeve member 5 comprises an inner surface adapted to fit to a second tool, an outer surface 13 comprising threads 15, a front portion 17 and a rear portion 19. The screw member 3 is rotatable connected to the front portion 17 of the sleeve member 5 in such a way that the head portion of the screw member 3 is reachable by the first tool from inside of the sleeve member 5. The screw member 3 and the sleeve member 5 are adapted to be rotationally fixated when using the first tool. By way of an example, this is due to that both the screw member 3 and the sleeve member 5 are adapted to fit to the first tool. When using the first tool which fixates the screw member 3 and the sleeve member 5 in relation to each other, the frame screw 1 can be perceived as a rigid screw which can be inserted into both a frame and an adjacent transom with the same turning motion of the first tool. This is due to the first tool being in engagement with both the inner surface of the sleeve member 5 and the head portion of the screw member 3 at the same time, causing both the screw member 3 and the sleeve member 5 to turn in a synchronized rotation. With the thread pitch of the screw member 3 and the sleeve member 5 being the same in this embodiment, there will be no displacement of the frame in respect to the transom during the insertion of the frame screw 1. The screw member 3 and the sleeve member 5 may have difference in thread pitch in other embodiments of the invention. However, in this example embodiment, the screw member 3 and the sleeve member 5 have essentially the same thread pitch. The screw member 3 and the sleeve member 5 are adapted to be rotationally free-moving in relation to each other when using a second tool. By way of an example, this is due to that only the sleeve member is adapted to fit to the second tool. Said second tool is only in engagement with the inner surface of the sleeve member 5. Therefore, when the second tool is being turned about its own axis the sleeve member 5 is rotated in relation to the screw member 3 which in turn moves the frame in which the sleeve member 5 is mounted in, in relation to the transom in which the screw member 3 is mounted into.

In this manner, the frame screw 1 is configured to be readjusted after insertion of the frame screw 1 into a wall segment. That is, the frame screw is typically configured to be readjusted upon a rotation of the sleeve member 5 by the second tool. The frame screw is capable of being readjusted due to the rotatable configuration of the screw member and the sleeve member.

Hence, it is to be noted that the frame screw is typically a readjustable frame screw.

The readjustable configuration of the frame screw is provided by the provisions above, i.e. the screw member is rotatable connected to the front portion of the sleeve member and the head portion of the screw member is reachable by the first tool from inside of the sleeve member. The screw member and the sleeve member are adapted to be rotationally fixated when using the first tool and rotationally free-moving when using the second tool, the rotation when using the second tool being used to adjust the rotational displacement of the sleeve member in respect to the screw member.

In this manner, the frame screw is configured to permit at least a certain degree of adjustment of the connection in order to allow for a displacement of the frame relative to the transom. To this end, the frame is displaced relative to the transom because the frame is moving on threads of the sleeve member. Accordingly, a frame screw is different from a conventional fastening element, which is intended for attaining a permanent connection between e.g. two wall segments.

The frame screw 1 is further adapted to cut a path for the threads 15 of the sleeve member 5 of the frame screw 1 in order to avoid damaging the material and structure of the frame. This is achieved by at least parts of the threads 15 comprising the at least a part of the recess 21. The cutting of the thread path is achieved with at least one recess 21 in the outer surface 13 of the sleeve member 5, at the front portion 17 of said sleeve member 5 when the frame screw 1 is inserted into the frame. The at least one recess 21 being part of the threads 15 will, when engaging the material of the frame, cut the path for the threads 15 of the sleeve member 5, instead of crushing or splitting the material of said frame. The cutting of the path for the threads 15 of the sleeve member 5 will result in lesser risk of damaging the frame at its insertion point, which is visible from the inside of the frame when the mounting procedure is complete. The at least one recess 21 of the sleeve member 5 is primarily adapted to engage the frame with a cutting mechanism when the frame screw 1 is inserted into the frame. Hence, a clockwise rotation of the frame screw 1 will engage the cutting edge of the recess 21 to the frame to cut into the said frame.

As mentioned above, in this example embodiment, the recess 21 is disposed on the outer surface 13 comprising the threads 11. In other words, at least a part of the threads comprises at least a part of the recess.

Typically, the at least one recess 21 is arranged in a part of the outer surface 13 comprising the threads 11. As shown in the figures herein, the recess here extends across at least one thread, as seen in the axial direction of the sleeve member. By way of an example, the recess extends from the front side 29 towards the rear portion 19 and across at least one thread, as seen in the axial direction.

Furthermore, the recess in this example embodiment extends in a radial direction of the sleeve member 5. In other words, the recess extends in a radial direction from the outer surface 13 of the threads 15 towards the radial centre of the sleeve member 5. By way of an example, the recess extends from the major diameter of the external threads to at least the minor diameter of the external threads, as seen in the radial direction. More preferably, the recess extends from the major diameter of the external threads and across the minor diameter of the external threads.

The length of the recess 21 may be in the range of about 25% up to about 50% of the length of the sleeve member 5, and preferably in the range of about 30% up to about 40% of the sleeve member 5.

Figure 2 shows a perspective view of a design variant of a sleeve member 5 of a frame screw 1 according to an example embodiment of the present invention. In this view of the embodiment of the invention two recesses 21 are seen, originating from the front portion 17 of the sleeve member 5 and extending substantially towards the rear portion 19 respectively. The length of the recess 21 may be in the range of about 25% up to about 50% of the length of the sleeve member 5, and preferably in the range of about 30% up to about 40% of the sleeve member 5. In general, the sleeve member 5 is manufactured symmetrically, meaning two more recesses 21 are present on the opposite, in this view, non-visible side of the sleeve member 5. The recess 21 extending in said range of the sleeve member 5 typically ensures that at least part of the recess 21 is part of the threads 15 of the sleeve member 5.

It should be readily appreciated that each one of the recesses above may be adapted and include any one of the features or functions as described in relation to the fig. 1.

Figure 2 further shows that the sleeve member 5 may comprise an angled surface 23 comprising the cutting recess 21. The angled surface 23 further comprise a first edge 25 and a second edge 27, wherein the first edge 25 is the intersection of a front side 29 and the angled surface 23 of the sleeve member 5 and the second edge 27 is the intersection of the angled surface 23 and the outer surface 13 of the sleeve member 5. This creates a first angled portion of the recess 21 of the sleeve member 5 which will engage the surrounding frame when the frame screw 1 is inserted into the frame. It can also been seen that a first surface 31 of the recess 21 intersects with a second surface 33 of the recess at the first edge 25 of the angled surface 23 in this embodiment of the invention.

It should be readily appreciated that the features and functions as described in relation to the angled surface above may likewise be included and implemented in an example embodiment in which the sleeve member 5 merely comprises one recess, as described in relation to e.g. fig. 1 above.

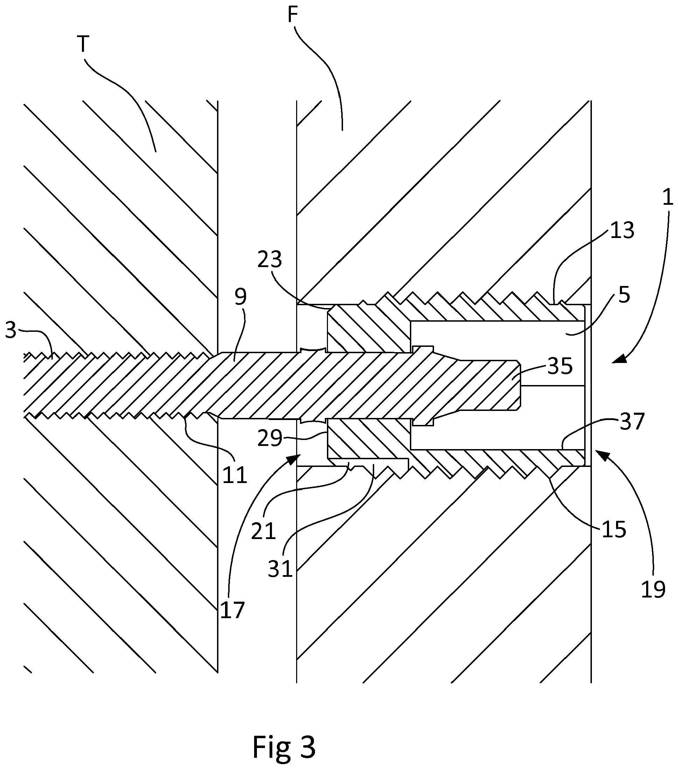

Figure 3 schematically shows a cross section view of a frame screw 1 mounted into a frame F and a transom T according to an example embodiment of the present invention. When using a first tool to engage both the head portion 35 of the screw member 3 and the inner surface 37 of the sleeve member 5, the frame screw 1 can be turned about its own axis as a rigid unit to screw the frame screw 1 into the frame F and transom T respectively. The recess 21 will cut a thread path when the sleeve member 5 engages the frame F when the frame screw 1 is inserted into the frame F. As is shown, the recess 21 and the first surface 31 are integrated with the threads 15 of the sleeve member 5. This means that the initial contact between the threads 15 and the frame F will result in a cutting of the frame F, in the shape of the threads 15. The threads 15 of the sleeve member 5 will then run smoothly in the thread path without splitting or crushing the material of the frame F during insertion of the frame screw 1. If the gap between the frame F and the transom T needs to be adjusted after the frame screw 1 is mounted in the frame F and the transom T, the second tool which only engages the inner surface 37 of the sleeve member 5 can be used. Rotating the sleeve member 5 in relation to the screw member by using the second tool will result in a vertical movement of the frame F due to the frame F moving on the threads 15 of the sleeve member 5. The movement of the frame F is in a direction towards or away from the transom T as desired, depending on the rotation of the sleeve member 5.

It is to be noted that the first tool and second tool are typically conventional tools as normally used in this type of field. This type of tools is well-known in the field of mounting screws such as frame screws, and thus not further described herein.

The first angle α1 of the recess as defined by the intersection of a first surface 31 of the recess and the periphery of the outer surface 13 may be formed in several different ways. The first angle of the recess defines a cutting edge intersection. A cutting edge intersection can either be formed by means of a right angle or an acute angle, as further described hereinafter. In this matter, the recess is configured to further improve the cutting of the thread path as mentioned above, whilst minimizing the risk of damaging the frame and its surface.

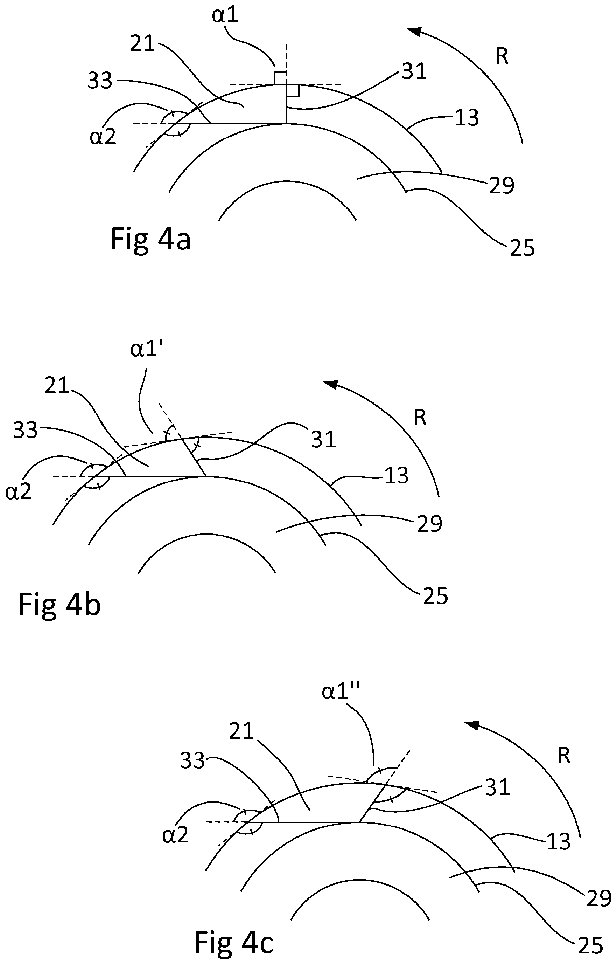

Figure 4a schematically shows a front view of a section of a sleeve member 5 of a frame screw 1 according to another example embodiment of the present invention. As seen in figure 4a a first angle α1 of the recess 21 is a right angle and a second angle α2 is an obtuse angle. When the frame screw is inserted into a surrounding frame F, corresponding with the rotation of the frame screw 1 in the rotational direction R, the edge of the first surface 31 will engage with the material of the frame F and cut a path for the threads 15 of the sleeve member. If the frame screw 1 is rotated in the opposite direction the second angle α2 will not be sharp enough to produce a cut, leaving the thread path from the first cut intact.

Figure 4b schematically shows a front view of a section of a sleeve member 5 of a frame screw 1 according to yet another example embodiment of the present invention. As seen in figure 4b the first angle α1' of the recess 21 is an acute angle and the second angle α2 is an obtuse angle. When the frame screw is inserted into a surrounding frame F, corresponding with the rotation of the frame screw 1 in the rotational direction R, the edge of the first surface 31 will engage with the material of the frame F and cut a path for the threads 15 of the sleeve member. If the frame screw 1 is rotated in the opposite direction the second angle α2 will not be sharp enough to produce a cut, leaving the thread path from the first cut intact. The cut obtained with an acute angle will be efficient as the acute angle will result in a sharper cutting edge.

Figure 4c schematically shows a front view of a section of a sleeve member 5 of a frame screw 1 according to another example embodiment of the present invention. As seen in figure 4c the first angle α1" of the recess 21 is an obtuse angle and the second angle α2 is also an obtuse angle. This embodiment of the invention may not produce as sharp cuts as the fourth and fifth embodiments of figure 4a and 4b respectively. However, with both α1 and α2 being obtuse angles the recess 21 will be large and therefore be able to contain large amounts of ship and shiver produced by the cutting of the frame F.

The different angles α1, α1', α1" of the different embodiments shown in figure 4a-c may be combined in various ways to create a plurality of combination of mechanical and structural properties. Different combination of these embodiments may also achieve different cutting characteristics for different types of frames F and frame materials, such as wood, plastics or metals.

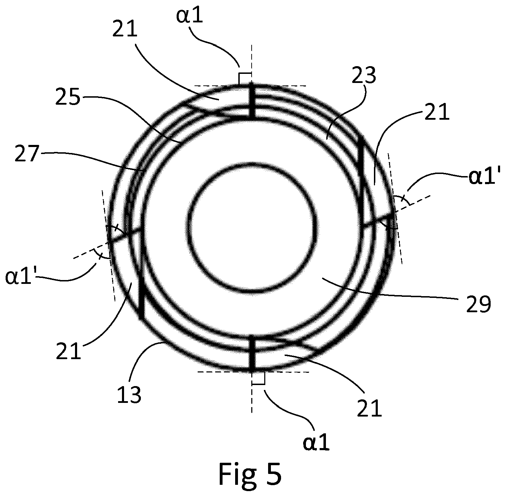

Figure 5 schematically shows a front view of a sleeve member 5 of a frame screw 1 according to another example embodiment of the present invention. In this embodiment of the present invention the sleeve member 5 comprises four recesses 21. Two recesses 21 in this embodiment of the invention have sharp first angles α1' and the remaining two recesses 21 may have right first angles α1. The sharp first angles α1' will produce an efficient cut into the surrounding frame F and the recesses 21 with the right first angles α1 are able to at the same time gather up a larger volume of ship and shiver produced by the cutting of the frame F.

It should be readily appreciated that any one of the features, functions and configurations of the example embodiments as described in relation to figs. 1-3 may be included in any one of the example embodiments described in conjunction to figs. 4a-5 above.

The invention is not limited to the specific embodiments presented. Combinations of features between different embodiments are possible.

## Claims

1. A frame screw (1) comprising;
a screw member (3), and
a sleeve member (5),
wherein the screw member (3) comprises;
a tip portion (7),
a shaft (9) comprising threads (11), and
a head portion (35) adapted to fit to a first tool,
wherein the sleeve member (5) comprises;
an inner surface (37) adapted to fit to the first tool and a second tool,
an outer surface (13) comprising threads (15),
a front portion (17),
a front side (29), and
a rear portion (19),
wherein the screw member (3) being rotatable connected to the front portion (17) of the sleeve member (5) and the head portion (35) of the screw member (3) being reachable by the first tool from inside of the sleeve member (5),
the screw member (3) and the sleeve member (5) are adapted to be rotationally fixated when using the first tool and rotationally free-moving when using the second tool, the rotation when using the second tool being used to adjust the rotational displacement of the sleeve member (5) in respect to the screw member (3), **characterized in that**; the outer surface (13) of the sleeve member (5) comprises at least one recess (21) adapted for cutting a thread path into a surrounding frame (F) when used.

2. Frame screw (1) according to claim 1, wherein the front portion (17) of the sleeve member (5) comprises an angled surface (23) comprising a first edge (25) and a second edge (27), wherein the first edge (25) is the intersection of the front side (29) and the angled surface (23), and the second edge (27) is the intersection of the angled surface (23) and the outer surface (13) of the sleeve member (5).

3. Frame screw (1) according to claim 2, wherein the at least one recess (21) originates from the first edge (25) of the sleeve member (5) and extends in a direction substantially towards the rear portion (19) of the sleeve member (5).

4. Frame screw (1) according to any of the preceding claims, wherein the at least one recess (21) of the outer surface (13) of the sleeve member (5) comprises a first surface (31) and a second surface (33) separate from the outer surface (13) of the sleeve member (5), wherein the intersection of the first surface (31) and the periphery of the outer surface (13) creates a first angle (α1), the intersection of the second surface (33) and the periphery of the outer surface (13) creates a second angle (α2), and the first surface (31) and the second surface (33) intersects in between the outer surface (13) and the inner surface (37).

5. Frame screw (1) according to claim 4, wherein the at least one recess (21) of the sleeve member (5) comprises a first angle (α1) wherein the first angle (α1) is a right angle.

6. Frame screw (1) according to claim 4, wherein the at least one recess (21) of the sleeve member (5) comprises a first angle (α1) wherein the first angle (α1) is an acute angle.

7. Frame screw (1) according to claim 4, wherein the at least one recess (21) of the sleeve member (5) comprises a first angle (α1) wherein the first angle (α1) is an obtuse angle.

8. Frame screw (1) according to claim 4, wherein the sleeve member (5) comprises four recesses (21), two of the recesses (21) having sharp first angles (α1) and two of the recesses (21) having right first angles (α1).

9. Frame screw (1) according to any of the preceding claims, wherein the length of the recess (21) is in the range from about 25% up to about 50% of the length of the sleeve member (5).

10. Frame screw (1) according to any of the preceding claims, wherein the length of the recess (21) is in the range from about 30% up to about 40% of the length of the sleeve member (5).

11. Frame screw (1) according to any one of the preceding claims, wherein the at least one recess (21) is arranged in a part of the outer surface (13) comprising the threads (15).

12. Frame screw (1) according to any one of the preceding claims, wherein the at least one recess (21) extends across at least one thread (15), as seen in an axial direction of the sleeve member (5).

13. Frame screw (1) according to any one of the preceding claims, wherein the depth of the recess (21), as seen in a radial direction of the sleeve member (5) amounts at least to the height of the external threads (15), as seen in the radial direction of the sleeve member (5), still preferably the depth of the recess (21), as seen in the radial direction, is larger than the height of the external threads (15).

## Patentansprüche

1. Rahmenschraube (1) umfassend;
ein Schraubenelement (3) und
ein Hülsenelement (5),
wobei das Schraubenelement (3) umfasst;
einen Spitzenteil (7),
einen Gewinde (11) umfassenden Schaft (9) und
einen Kopfteil (35), der so ausgebildet ist, dass er zu einem ersten Werkzeug passt,
wobei das Hülsenelement (5) umfasst;
eine Innenfläche (37), die so ausgebildet ist, dass sie zum ersten Werkzeug und einem zweiten Werkzeug passt,
eine Gewinde (15) umfassende Außenfläche (13),
einen Vorderteil (17),
eine Vorderseite (29) und
einen hinteren Teil (19),
wobei das Schraubenelement (3) mit dem Vorderteil (17) des Hülsenelements (5) drehbar verbunden ist, und der Kopfteil (35) des Schraubenelements (3) aus dem Inneren des Hülsenelements (5) vom ersten Werkzeug erreichbar ist,
das Schraubenelement (3) und das Hülsenelement (5) so ausgebildet sind, dass sie bei Anwendung des ersten Werkzeugs drehbar fixiert sind und bei Anwendung des zweiten Werkzeugs sich drehbar frei bewegen, wobei die Drehung bei Anwendung des zweiten Werkzeugs in Bezug auf das Schraubenelement (3) zur Justierung der drehbaren Verschiebung des Hülsenelements (5) verwendet wird,
**dadurch gekennzeichnet, dass**;
die Außenfläche (13) des Hülsenelements (5) zumindest eine Ausnehmung (21) umfasst, die so ausgebildet ist, dass sie bei Anwendung einen Gewindeweg in einen umgebenden Rahmen (F) einschneidet.

2. Rahmenschraube (1) nach Anspruch 1, wobei der Vorderteil (17) des Hülsenelements (5) eine abgewinkelte Fläche (23) umfasst, umfassend eine erste Kante (25) und eine zweite Kante (27), wobei die erste Kante (25) der Schnitt der Vorderseite (29) und der abgewinkelten Fläche (23) ist, und die zweite Kante (27) der Schnitt der abgewinkelten Fläche (23) und der Außenfläche (13) des Hülsenelements (5) ist.

3. Rahmenschraube (1) nach Anspruch 2, wobei die zumindest eine Ausnehmung (21) aus der ersten Kante (25) des Hülsenelements (5) resultiert und sich in einer Richtung im Wesentlichen zum hinteren Teil (19) des Hülsenelements (5) hin erstreckt.

4. Rahmenschraube (1) nach einem der vorhergehenden Ansprüche, wobei die zumindest eine Ausnehmung (21) der Außenfläche (13) des Hülsenelements (5) eine erste Fläche (31) und eine zweite Fläche (33), getrennt von der Außenfläche (13) des Hülsenelements (5), umfasst, wobei der Schnitt der ersten Fläche (31) und des Umfangs der Außenfläche (13) einen ersten Winkel (α1) bildet, der Schnitt der zweiten Fläche (33) und des Umfangs der Außenfläche (13) einen zweiten Winkel (α2) bildet, und die erste Fläche (31) und die zweite Fläche (33) zwischen der Außenfläche (13) und der Innenfläche (37) sich schneiden.

5. Rahmenschraube (1) nach Anspruch 4, wobei die zumindest eine Ausnehmung (21) des Hülsenelements (5) einen ersten Winkel (α1) umfasst, wobei der erste Winkel (α1) ein rechter Winkel ist.

6. Rahmenschraube (1) nach Anspruch 4, wobei die zumindest eine Ausnehmung (21) des Hülsenelements (5) einen ersten Winkel (α1) umfasst, wobei der erste Winkel (α1) ein spitzer Winkel ist.

7. Rahmenschraube (1) nach Anspruch 4, wobei die zumindest eine Ausnehmung (21) des Hülsenelements (5) einen ersten Winkel (α1) umfasst, wobei der erste Winkel (α1) ein stumpfer Winkel ist.

8. Rahmenschraube (1) nach Anspruch 4, wobei das Hülsenelement (5) vier Ausnehmungen (21) umfasst, wobei zwei der Ausnehmungen (21) scharfe erste Winkel (α1) aufweisen, und zwei der Ausnehmungen (21) rechte erste Winkel (α1) aufweisen.

9. Rahmenschraube (1) nach einem der vorhergehenden Ansprüche, wobei die Länge der Ausnehmung (21) im Bereich von etwa 25 % auf etwa 50 % der Länge des Hülsenelements (5) liegt.

10. Rahmenschraube (1) nach einem der vorhergehenden Ansprüche, wobei die
Länge der Ausnehmung (21) im Bereich von etwa 30 % auf etwa 40 % der Länge des Hülsenelements (5) liegt.

11. Rahmenschraube (1) nach einem der vorhergehenden Ansprüche, wobei die zumindest eine Ausnehmung (21) in einem Teil der die Gewinde (15) umfassenden Außenfläche (13) angeordnet ist.

12. Rahmenschraube (1) nach einem der vorhergehenden Ansprüche, wobei in Axialrichtung des Hülsenelements (5) gesehen die zumindest eine Ausnehmung (21) sich über zumindest ein Gewinde (15) erstreckt.

13. Rahmenschraube (1) nach einem der vorhergehenden Ansprüche, wobei in Radialrichtung des Hülsenelements (5) gesehen die Tiefe der Ausnehmung (21) zumindest der Höhe der Außengewinde (15), in der Radialrichtung des Hülsenelements (5) gesehen, entspricht, wobei in der Radialrichtung gesehen die Tiefe der Ausnehmung (21) immer noch bevorzugt größer als die Höhe der Außengewinde (15) ist.

## Revendications

1. Vis de cadre (1) comprenant;
un élément de vis (3), et
un élément de manchon (5),
dans laquelle l'élément de vis (3) comprend;
une partie de pointe (7),
un arbre (9) comportant des filets (11), et
une partie de tête (35) adaptée pour répondre à un premier outil,
dans laquelle l'élément de manchon (5) comprend;
une surface intérieure (37) adaptée pour répondre au premier outil et un deuxième outil,
une surface extérieure (13) comprenant des filets (15),
une partie avant (17),
une face avant (29), et
une partie arrière (19),
l'élément de vis (3) étant relié de manière rotative à la partie avant (17) de l'élément de manchon (5) et la partie de tête (35) de l'élément de vis (3) étant accessible par le premier outil depuis l'intérieur de l'élément de manchon (5),
l'élément de vis (3) et l'élément de manchon (5) sont adaptés pour être fixés en rotation lors de l'utilisation du premier outil et de manière à pouvoir se déplacer librement en rotation lors de l'utilisation du deuxième outil, la rotation lors de l'utilisation du deuxième outil étant utilisée pour régler le déplacement de rotation de l'élément de manchon (5) relativement à l'élément de vis (3),
**caractérisé en ce que**;
la surface extérieure (13) de l'élément de manchon (5) comprend au moins un évidement (21) conçu pour couper un trajet de filet dans un cadre périphérique (F) lorsqu'il est utilisé.

2. Vis de cadre (1) selon la revendication 1, dans laquelle la partie avant (17) de l'élément de manchon (5) comprend une surface inclinée (23) comprenant un premier bord (25) et un deuxième bord (27), le premier bord (25) étant l'intersection de la face avant (29) et la surface inclinée (23), et le deuxième bord (27) étant l'intersection de la surface inclinée (23) et la surface extérieure (13) de l'élément de manchon (5).

3. Vis de cadre (1) selon la revendication 2, dans laquelle l'au moins un évidement (21) provient du premier bord (25) de l'élément de manchon (5) et s'étend dans une direction essentiellement vers la partie arrière (19) de l'élément de manchon (5).

4. Vis de cadre (1) selon l'une quelconque des revendications précédentes, dans laquelle l'au moins un évidement (21) de la surface extérieure (13) de l'élément de manchon (5) comprend une première surface (31) et une deuxième surface (33) séparées de la surface extérieure (13) de l'élément de manchon (5), l'intersection de la première surface (31) et la périphérie de la surface extérieure (13) créant un premier angle (α1), l'intersection de la deuxième surface (33) et la périphérie de la surface extérieure (13) créant un deuxième angle (α2) et la première surface (31) et la deuxième surface (33) coupant entre la surface extérieure (13) et la surface intérieure (37).

5. Vis de cadre (1) selon la revendication 4, dans laquelle l'au moins un évidement (21) de l'élément de manchon (5) comprend un premier angle (α1), le premier angle (α1) étant un angle droit.

6. Vis de cadre (1) selon la revendication 4, dans laquelle l'au moins un évidement (21) de l'élément de manchon (5) comprend un premier angle (α1), le premier angle (α1) étant un angle aigu.

7. Vis de cadre (1) selon la revendication 4, dans laquelle l'au moins un évidement (21) de l'élément de manchon (5) comprend un premier angle (α1), le premier angle (α1) étant un angle obtus.

8. Vis de cadre (1) selon la revendication 4, dans laquelle l'élément de manchon (5) comporte quatre évidements (21), deux des évidements (21) ayant des premiers angles tranchants (α1) et deux des évidements (21) ayant des premiers angles droits (α1).

9. Vis de cadre (1) selon l'une quelconque des revendications précédentes, dans laquelle la longueur de l'évidement (21) est comprise entre environ 25% jusqu'à environ 50% de la longueur de l'élément de manchon (5).

10. Vis de cadre (1) selon l'une quelconque des revendications précédentes, dans laquelle la longueur de l'évidement (21) est comprise entre environ 30% jusqu'à environ 40% de la longueur de l'élément de manchon (5).

11. Vis de cadre (1) selon l'une quelconque des revendications précédentes, dans laquelle l'au moins un évidement (21) est disposé dans une partie de la surface extérieure (13) comprenant des filets (15).

12. Vis de cadre (1) selon l'une quelconque des revendications précédentes, dans laquelle l'au moins un évidement (21) s'étend à travers au moins un filet (15), comme on le voit dans une direction axiale de l'élément de manchon (5).

13. Vis de cadre (1) selon l'une quelconque des revendications précédentes, dans laquelle la profondeur de l'évidement (21), tel que vu dans une direction radiale de l'élément de manchon (5), s'élève au moins à la hauteur des filets extérieurs (15), comme on le voit dans la direction radiale de l'élément de manchon (5), de préférence encore la profondeur de l'évidement (21), vu dans la direction radiale, est supérieure à la hauteur des filets externes (15).
